# EUROPEAN PATENT APPLICATION

(11) **EP 1 746 504 A1**
(43) Date of publication of application: **24.01.2007**
(21) Application number: 05720858.9
(22) Date of filing: 16.03.2005
(51) Int. Cl.: G06F 9/46, G11B 20/10, G01C 21/00

(54) **DATA PROCESSING PROGRAM AND DATA PROCESSING DEVICE**

(30) Priority: 28.04.2004 JP 2004133818
(71) Applicant: MATSUSHITA ELECTRIC INDUSTRIAL CO., LTD., Osaka 571-8501 (JP)
(72) Inventor: YASUDA, Takehiko c/o Matsushita El. Ind. Co., Ltd, Chuo-ku, Osaka-shi, Osaka 540-6319 (JP); ADACHI, Yoshiteru c/o Matsushita El. Ind. Co., Ltd, Chuo-ku, Osaka-shi, Osaka 540-6319 (JP); UCHIDA, Takeshi c/o Matsushita El. Ind. Co., Ltd, Chuo-ku, Osaka-shi, Osaka 540-6319 (JP)
(74) Representative: Pautex Schneider, Nicole Véronique
(86) International application number: PCT/JP2005/004604
(87) International publication number: WO 2005/106661

(57) **Abstract**

It is an object of the present invention to provide a data processing program and a data processing device which can ensure predetermined processing rates of other processes although a high speed ripping process may be carried out from a storage medium, flexibly responding to the state of the other processes.

A processor 11 functions as changing means for changing a processing priority level of one of an encode function thread T2 for encoding data and other processes in accordance with the processing rate of the encode function thread T2. It is preferable that the changing means is operable to change the processing priority level at predetermined timings.

## Description

### TECHNICAL FIELD OF THE INVENTION

The present invention relates to a data processing program and a data processing device, particularly to a data processing program suitable for a device for storing and reproducing information read out from a storage medium disk, or the like, and a data processing device comprising the same, and more particularly to a data processing program and a data processing device effective when built into a car navigation system.

### DESCRIPTION OF THE RELATED ART

Conventionally, as a data processing program and a data processing device of this kind there is known a recording and reproducing device and a control program for controlling the same, for example, as shown in FIG. 6 (see, for example, patent document 1). The data recording and reproducing device comprises an analog to digital converter (hereinlater simply referred to as an "AD converter") 33, a compressing circuit 34, a recording buffer memory 35, an encoder 36, and a recording circuit 37 as constituent elements forming part of a recorded information recording unit, and a reproducing circuit 38, a decoder 39, a reproducing buffer memory 40, a decompressing circuit 41, and a digital to analog converter (hereinlater simply referred to as a DA converter) 42 as constituent elements forming part of an information reproducing unit, in addition to a pickup 31. Further, the data recording and reproducing device comprises a CPU (Central Processing Unit) 43 for controlling the above mentioned constituent elements.

Input data Sin inputted from an exterior device is firstly converted by the AD converter 33 into a digital signal, compressed by the compressing circuit 34 and stored into the recording buffer memory 35. The data thus stored is compressed and encoded by the encoder 36 and transferred to the recording circuit 37 as coded information. Then, the recording circuit 37 is operated to write the data thus encoded into a medium disk 30 having stored therein encoded information through the pickup 31 in accordance with a predetermined writing control signal from the CPU 43.

The information stored in the medium disk 30 is read into the reproducing circuit 38 through the pickup 31, decoded by the decoder 39, and temporally stored in the reproducing buffer memory 40. Then, the information is, in turn, outputted to and decompressed by the decompressing circuit 41, and converted into an analog format by and outputted through the DA converter 42.
Patent Document 1: Patent Laid-Open Publication H11-273246.

### DISCLOSURE OF THE INVENTION

### PROBLEMS TO BE SOLVED

The conventional data processing program and the conventional data processing device as described hereinearlier, however, encounters a drawback in that it is difficult to reproduce music at user's choice in the case that the data encoding process is carried out to compress and encode music information data from the medium disk 30, at a high speed.

For example, in the case that the above data encoding process is carried out by means of, so-called, a multithread method, a plurality of threads each indicative of a unit process are required to be assigned to respective priority levels. This leads to the fact that the each of the threads is, in advance, assigned to a priority level in accordance with a processing load and an order of user's request of each of the unit processes. This means that a CPU processing time is secured for a unit process of a thread assigned to a higher priority level on a preferential basis, viz., in preference to a unit process of a thread assigned to a lower priority level. Further, the CPU processing time may be secured by means of the round robin method in the case that there are the units processes equal to each other in the priority level. Thus, the data is processed ensuring that hardware resources are cyclically utilized at predetermined time intervals in a multiplexed manner.

A drawback is encountered in that it is difficult to execute an AAC encoding thread, for an audio reproducing process which requires 10% of the CPU processing time, in a car navigation system which carries out a plurality of threads of searching a route, updating a map display, and the like, in parallel, resulting from the fact that approximately 60% of the CPU processing time is required to be assigned to the AAC (Advanced Audio Coding) encoding thread, for example, while data is read at a high speed viz., x-double speed).

Another drawback is encountered in that processing rates of the other threads are considerably decreased in order to rip data, viz., compress, encode, and store data into a file at a high speed after the data is read out from a medium disk at a high speed, for example, x-double speed, resulting from the fact that the processing rate of the data processing related to the ripping operation is required to keep pace with the reading rate of the data from the medium disk.

The present invention is made with a view to overcoming the previously mentioned drawbacks, and it is an object of the present invention to provide a data processing program and a data processing device which can ensure predetermined processing rates regardless of whether information data is ripped from a disk shaped recording medium at a high speed, or other processing is carried out, flexibly responding to the state of the other processing.

### MEANS OF SOLVING THE PROBLEMS

In accordance with a first aspect of the present invention, there is provided a data processing program executable by a computer to implement a function as changing means for changing a processing priority level of one of a specific encoding process of encoding data and the other data process in accordance with a processing rate of said specific encoding process.

The data processing program thus constructed as previously mentioned can adjust assignments of the CPU processing time, and thus, carry out data processing adaptively responding to the processing states of the other processes in such a manner that information data from a storage medium such as, for example, a disk shaped recording medium can be ripped at a high speed while securing required processing rates for the other processes, resulting from the fact that the processing priority level of one of the specific encoding process and the other processes is adaptively changed in accordance with the processing state of the specific processing process.

In the data processing program according to the present invention, said changing means may be operative to change said processing priority level at a predetermined timing.

The aforementioned data processing program according to the present invention thus constructed as previously mentioned can finely adjust the priority level in accordance with the change of the processing states of the specific encoding process and other processes, in such a manner that a high speed ripping can be executed while influences on the other process are controlled.

Further, in the data processing program according to the present invention, said changing means may be operative to change said processing priority level of said specific encoding process from a current processing priority level to a high processing priority level higher than said current processing priority level when said processing rate of said specific encoding process becomes smaller than a reading speed of reading data to be encoded from a storage medium.

The aforementioned data processing program according to the present invention thus constructed as previously mentioned can prevent the specific encoding process from becoming unable to keep pace with the data reading process of reading data from the storage medium, thereby enabling to carry out a high speed ripping while controlling influences on the other processes.

Said changing means may be operative to change said processing priority level of said specific encoding process from a current processing priority level to a high processing priority level higher than said current processing priority level when said processing rate of said specific encoding process becomes smaller than a minimum level of a reading speed of reading out data to be encoded from a storage medium.

The aforementioned data processing program according to the present invention thus constructed as previously mentioned can normally set the priority level of the specific encoding process at a low level, and carry out a high speed ripping while controlling the decreases of the processing rates of the other processes.

In accordance with a second aspect of the present invention, there is provided a data processing device comprising a data processing program executable by a computer to implement a function as changing means for changing a processing priority level of one of a specific encoding process of encoding data and the other data process in accordance with a processing rate of said specific encoding process.

The aforementioned data processing device according to the present invention thus constructed as previously mentioned can carry out data processing adaptively responding to the processing states of the other processes in such a manner that information data from a storage medium such as, for example, a disk shaped recording medium can be ripped at a high speed while securing required processing rates for the other processes, resulting from the fact that the processing priority level of one of the specific encoding process and the other processes is adaptively changed in accordance with the processing state of the specific processing process.

### EFFECT OF THE INVENTION

According to the present invention, a data processing can be carried out flexibly responding to the processing state, in such a manner that, for example, information data can be ripped from a disk shaped recording medium, or the like, at a high speed while securing required processing rates for the other processes. This leads to the fact that the present invention can provide a data processing program and a data processing device which can carry out a high speed ripping operation while reducing adverse influences on the other operations when built into a car navigation system which carries out a plurality of threads of searching a route, updating a map display, and the like.

### BRIEF DESCRIPTION OF THE DRAWINGS

[FIG. 1] FIG. 1 is a schematic block diagram showing a sound recording and reproducing device forming part of an in-vehicle car navigation system comprising a preferred embodiment of a data processing program according to the present invention.
[FIG. 2] FIG. 2 is a view explaining a construction of a storage area forming part of a storage device in a preferred embodiment.
[FIG. 3] FIG. 3 is a view explaining how priority levels of a plurality of threads are set and changed in a preferred embodiment.
[FIG. 4] FIG. 4 is a timing chart explaining processes of changing priority levels carried out in a preferred embodiment of a data processing program according to the present invention.
[FIG. 5] FIG. 5 is a flow chart outlining essential processes carried out in a preferred embodiment of a data processing program according to the present invention.

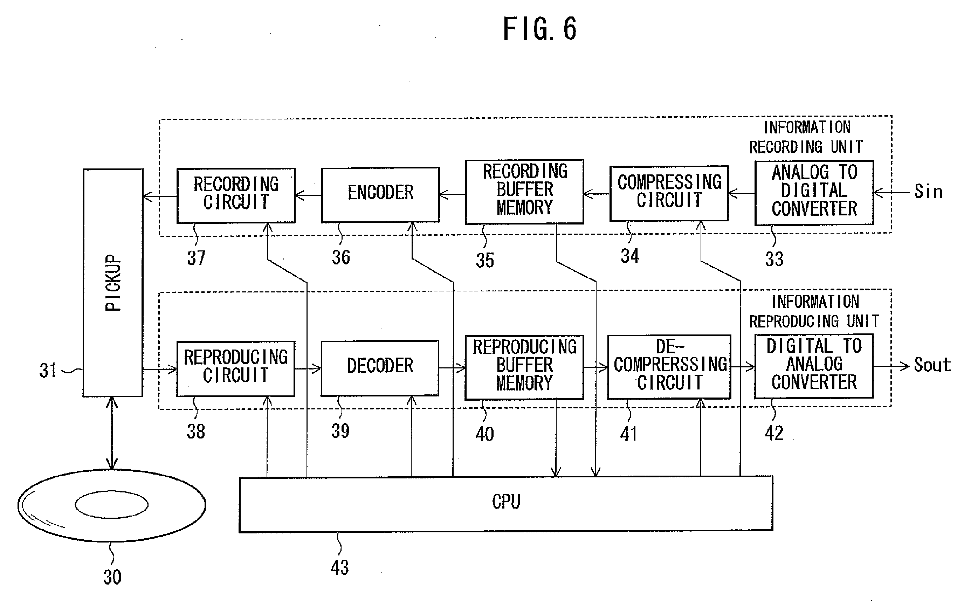

[FIG. 6] FIG. 6 is a block diagram of a conventional sound recording and reproducing device.

### EXPLANATION OF THE REFERENCE NUMERALS

- 1: Disk shaped recording medium (storage medium)
- 11: Processor (computer)
- 12: Buffer memory
- 13: Buffer storage device
- A1: First LBA area
- A2: Map data FAT area
- A3: Music data FAT (Transaction-safe FAT) area
- A4: HMI data FAT area
- A5: Work area as ripping PCM data storage area
- T1: Read function thread
- T2: AAC encode function thread
- T3: Accumulative record function thread
- T4: First reproduction function thread (PCM reproduction thread)
- T5: ACC decode function thread
- T6: Other threads

### DESCRIPTION OF THE PREFERRED EMBODIMENTS

The following description will be directed to a preferred embodiment according to the present invention with reference to the drawings.

It is herein assumed that the present embodiments of a data processing program and a data processing device according to the present invention are applied to a sound recording and reproducing device forming part of an in-vehicle car navigation system (hereinlater simply referred to as "sound recording and reproducing device") and a control program for controlling the same.

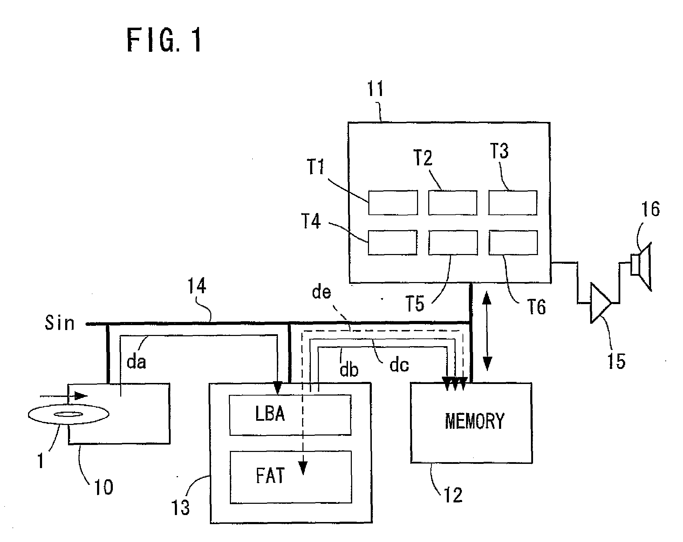

As clearly seen from a schematic view shown in FIG. 1, the present embodiment of the sound recording and reproducing device comprises a processor 11 for carrying out a data processing program by means of a multithread method to implement processes of reproducing, compressing, and accumulating data read out from a disk shaped recording medium 1 or data inputted from the other exterior memory, a buffer memory 12 to be accessed by the processor 11, and a buffer storage device 13 to be accessed by the processor 11.

The disk shaped recording medium 1 is a removable storage medium for storing therein predetermined data, and constituted by, for example, a CD (Compact Disc), a DVD (Digital Versatile Disc), or the other optical disk, which can be optically read. Data stored in the disk shaped recording medium 1 is PCM (Pulse Code Modulation) digital audio data such as, for example, CD-DA (Compact Disc Digital Audio) data, but this does not limit the present invention. The data stored in the disk shaped recording medium 1 may be MP3 (MPeg audio layer 3) compressed data, and may include image data. The disk shaped recording medium 1 is not limited to the optical disk. The disk shaped recording medium 1 is constituted by a removable data storage medium, thereby resulting in the fact that the data transfer rate of transferring read-out data is lower than that of any one of the buffer memory 12 and the buffer storage device 13.

The data recorded in the disk shaped recording medium 1 is read out by a disk drive 10 such as, for example, a CD/DVD deck, or the like, and transferred at a predetermined data transfer rate. This means that the disk drive 10 functions as a means for inputting and transferring data from a storage medium. In addition to reproducing data recorded in the disk shaped recording medium 1 such as, for example, a CD, a DVD, or the like, the disk drive 10 can write data into the disk shaped recording medium 1 as long as the disk shaped recording medium 1 is of the write-once type or the rewritable type.

The processor 11 is constituted by a microcomputer including a CPU, a memory, and an interface. The processor 11 is adapted to receive from and transmit to the buffer memory 12 and the buffer storage device 13 data to be processed. Further, the processor 11 is adapted to carry out a Direct Memory Access method data transfer process (hereinlater simply referred to as "DMA transfer") to the disk drive 10.

The buffer memory 12 is adapted to store therein data to be processed by the processor 11 in a readable state, and transmit data to and receive data from the processor 11 in processing. The buffer memory 12 is constituted by a semiconductor memory device functioning as a high speed buffer memory with data storage capacity of, for example, 2 megabytes.

The processor 11 is adapted to implement a plurality of threads including a read function thread T1 for temporarily storing in a first storage area (LBA area in FIG. 1) forming part of the buffer storage device 13 read-out data in a reproducible data format such as, for example, PCM digital audio data format, in response to a reproducing request input, an encode function thread T2 for carrying out a compressing and encoding process such as, for example, an AAC (Advanced Audio Coding) encoding process, on the read-out data, in response to a recording request input, an accumulative record function thread T3 for accumulatively recording, i.e., audio recording in the present embodiment, the encoded data, for example, as a music data file for one tune, in a second storage area (FAT area in FIG. 1) forming part of the buffer storage device 13, a first reproduction function thread T4 for reproducing and outputting sound on the basis of the data such as, for example, PCM digital audio data, temporality stored in the buffer storage device 13, in response to the reproducing request input, a decode function thread T5 for reading and decoding the data such as, for example, an AAC data file for one tune, accumulatively stored in the FAT area forming part of the buffer storage device 13 into reproducible data, and other threads T6 respectively for performing a plurality of operations such as, for example, an operation of updating current position information on a navigation map, a route searching operation, an image reproducing operation, an operation of operating a human machine interface (hereinlater simply referred to as "HMI''), and the like.

The LBA (Logical Block Addressing) area forming part of the buffer storage device 13 is an area where recorded information can be promptly read by means of a logical block address management, and the FAT (File Allocation Table) area forming part of the buffer storage device 13 is a file storage area where information on files of predetermined file formats to be processed in one or more predetermined OSs (Operation Systems) is stored in a readable state.

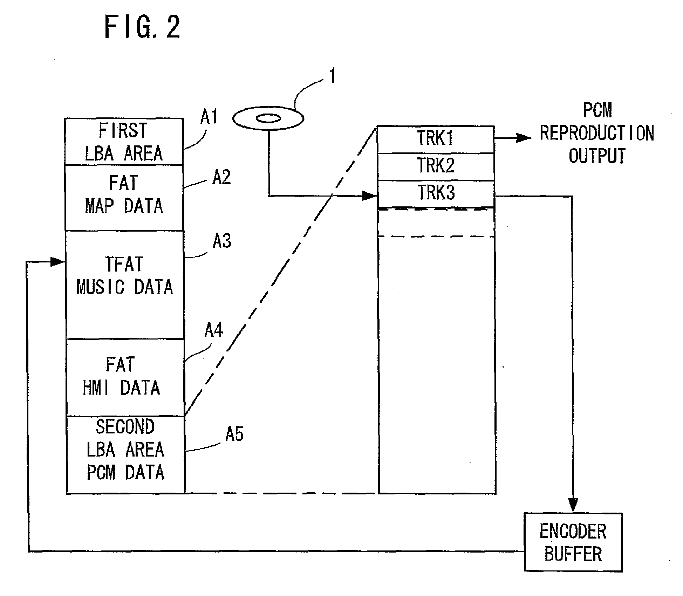

More specifically, the buffer storage device 13 includes a first LBA area A1 for read-only data, a FAT area A2 for map data, a TFAT (Transaction -safe FAT) area A3 for music data, a FAT area A4 for HMI data, and a work area A5 for storing therein PCM data to be used for Digital Audio Extraction, hereinlater simply referred to as "ripping", as shown in FIG. 2. In addition, the TFAT area is adapted to store therein encoded AAC data readably in the file format of a TFAT file system. The TFAT file system is designed to prevent transaction data on a memory card, a hard disk, or the like, from being lost in the event of lowering of electric power.

An access rate of the buffer storage device 13 (data writing and reading rate) is higher than a data transfer rate of data read-out from the disk drive 10 but lower than a data transfer rate of the buffer memory 12. The buffer storage device 13 is larger in storage capacity than the buffer memory 12, and constituted by, for example, a hard disk drive excellent in resistance to vibration or a memory card.

Description hereinlater will be directed to a brief overview of data flows while storing, compressing, accumulatively sound recording, and reproducing data read out from the disk shaped recording medium 1 carried out in the sound recording and reproducing device according to the present invention with reference to FIG. 2 of the drawings.

CD-DA data recorded in the disk shaped recording medium 1 is read by the disk drive 10 having an ATAPI (AT Attachment Packet Interface) drive, in response to a request from the read function thread T1, and outputted at a predetermined data transfer rate of, for example, 170 kilobytes to 1.7 megabytes by way of DMA (Direct Memory Access) transfer. The data flow is shown by an arrow "da" in FIG. 1.

The data thus read out and transferred is written into a plurality of logical blocks in the second LBA area A5 forming part of the buffer storage device 13 in units of, for example, a data portion (hereinlater simply referred to as "track data portion") read out for each of a plurality of recording tracks on the disk shaped recording medium 1. Such writing (storing) operations of writing (storing) data into the buffer storage device 13 are carried out while assigning the logical blocks to respective logical block addresses indicated by, for example, TRK1, TRK2, TRK3, and the like, as shown in FIG. 2, in ascending order of the track number, until the last recording track data portion recorded on the disk shaped recording medium 1.

This leads to the fact that after the completion of the above-mentioned writing operations, the processor 11 can promptly read out any track data portion from the buffer storage device 13 by specifying the logical block address assigned to the logical block having the track data portion stored therein.

For such data reading operations of reading data from the buffer storage device 13, there are prepared a plurality of read paths including, for example, a data read-out path (shown by an arrow "db" in FIG. 1) permitting data to be read for the AAC encoding process, and a reproduction output path (shown by an arrow "dc" in FIG. 1) permitting PCM data on a track other than a track on which the data is being read through the data read-out path, to be used for reproduction process, on the basis of each of the logical block addresses in units applied in the data writing process.

While data is read from the buffer storage device 13, the processor 11 can implement the encode function thread T2 to carry out a encoding process and the accumulative record function thread T3 to accumulatively record, i.e., audio record the AAC data of a predetermined file size in the buffer storage device 13 in turn (shown by an arrow "de" in FIG. 1).

On the other hand, the processor 11 is operated to implement the first reproduction function thread T4 to reproduce and output desired music subsequently using the track data portions in the format of MCM data the same in format as they were read.

Further, the processor 11 is operated to implement the decode function thread T5 to timely decode the compressed and encoded data accumulatively stored in the buffer storage device 13 into reproducible data, in response to the reproducing request input, and have sound outputted through an amplifier 15 and a speaker unit 16 based on the reproducible data.

In the present embodiments of the data processing program and the data processing device, the processor 11 constituted by a computer is operated to implement the other threads T6 or the like , in addition to the above-mentioned threads T1 through T5.

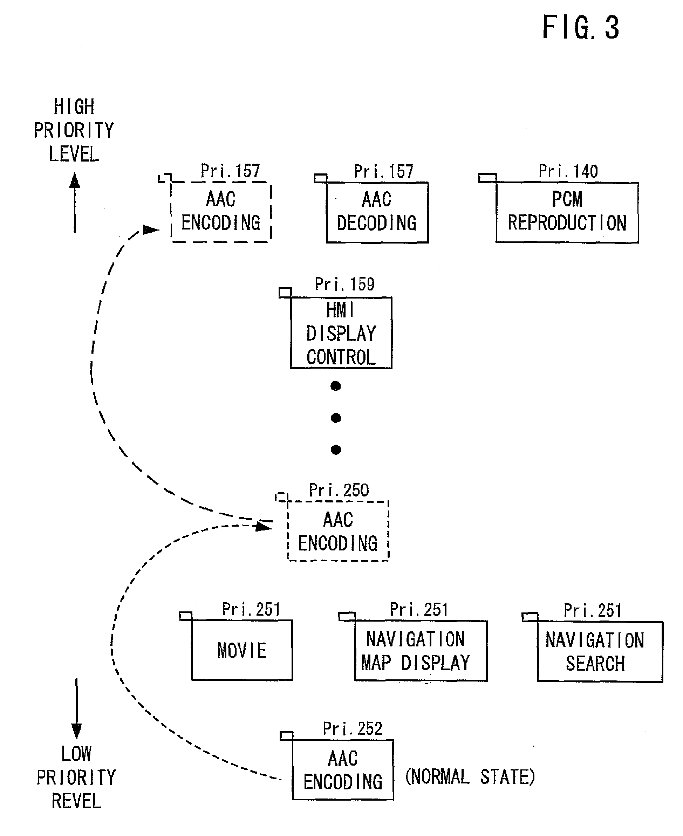

FIG. 3 shows examples of the aforementioned threads.

As clearly shown in FIG. 3, the plurality of threads to be implemented by the processor 11 are assigned to respective priority levels (each shown by a numerical value following the legend "Pri"). The smaller the numerical value assigned to the thread is, the more the CPU processing time in the processor 11 is secured for the thread on a priority basis. The priority level to be assigned to each of the threads may be constituted by a two-stage priority level, viz., a high priority level or a low priority level, or a multi-stage priority level, viz., one selected from among more than two priority levels. This means that priority level to be assigned to each of the threads may be constituted by, for example, three-stage priority level, viz., one selected from among a high priority level, a middle priority level, and a low priority level.

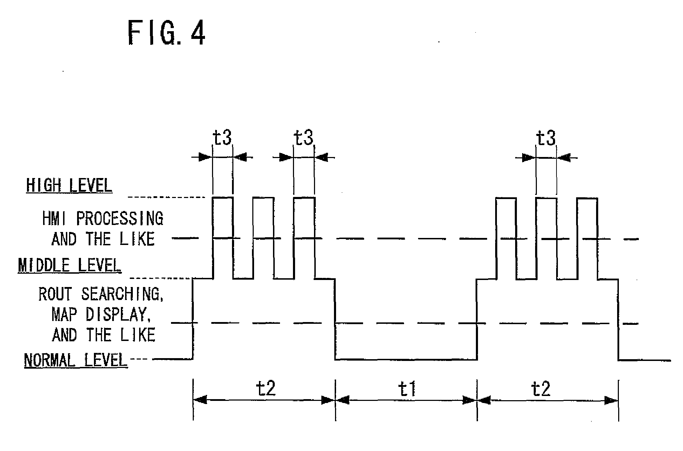

In this case, the thread T4, i.e., the PCM reproducing process (for example, approximately 2% of CPU processing time), and the thread T5, i.e., the AAC decoding process (for example, approximately 10% of CPU processing time), both of which are in general carried out not in a high load state but in a low load state, are assigned to a high priority level, and the thread of implementing the user interface such as, for example, HMI process is assigned to a high priority level but following the one assigned to the thread T4 or T5, as clearly shown in FIG. 3 and FIG. 4.

On the other hand, the threads of implementing a route searching process, a map display process, and image reproduction and display process ("Navigation Search", "Navigation Map Display", "Movie", and the like in FIG. 3) which tend to be carried out in a high load state for a car navigation system, are assigned to a middle priority level. Threads of implementing specific encoding processes such as, for example, the thread T2 of implementing the AAC encode function, which tends to be carried out in a high load state, are normally assigned to a low priority level.

Further, the processor 11 has incorporated therein a data processing program so as to function as changing means for changing the priority level of either one of a specific encoding processes of encoding data, for example, the AAC encode function thread T2, and the other data process thread, in accordance with the processing rate of the specific encoding process. This means that the processor 11 is adapted to change the priority level of the thread of either one of the specific encoding process and the other data process thread at predetermined timings, for example, predetermined cyclic intervals, as means for changing the priority level.

In the present embodiment, the priority level of, for example, the AAC encode function thread T2 is normally set a low priority level, but can be changed from a current priority level to a priority level higher than the current priority level as required, as shown in FIG. 4.

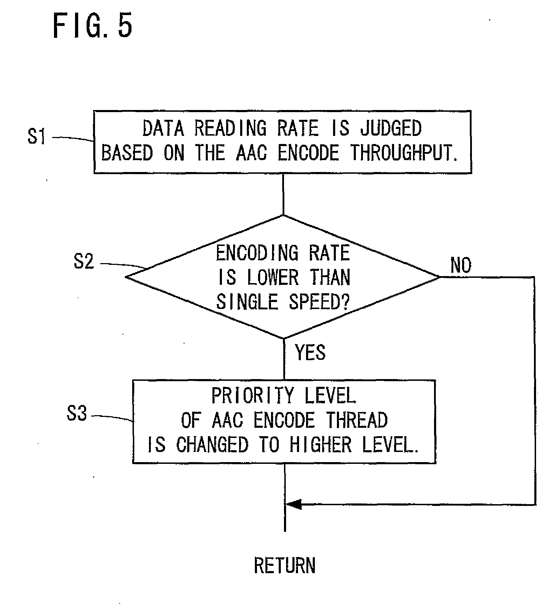

FIG. 5 shows a flow chart schematically explaining the process of changing the priority level. In FIG. 5, it is assumed that the processor 11, as means for changing the priority level, is adapted to change the priority level at intervals of a predetermined time cycle of, for example, one second.

In this process, firstly, the data reading rate of the disk drive 10 is measured based on the AAC encode throughput per unit time (for example, single speed, 4 x double speed, or the like) (step S1).

Then, it is judged whether the processing rate of the encoding process carried out in the AAC encode function thread likely becomes lower than the data transfer rate of the disk shaped recording medium 1 when the disk drive 10 is performing the reading process at a single speed, or is decreased to a predetermined processing rate slightly lower than the single speed (step S2).

When the result of the judgment is "YES", the priority level value of the AAC encode function thread T2 is changed from, for example, 252, viz., normal level to 250, viz., middle level (step S3).

In this state, the AAC encoding process can be adjusted so that the processing rate will keep pace with the data reading rate of the disk drive 10 because of the fact that the influences on threads implementing the route searching process, the map display process, the image reproduction and display process, and the like for the car navigation system are brought under control but the CPU processing time is secured for the AAC encoding process a little in preference to the threads. In the concrete, the processing times (shown by a legend "t2" in FIG. 4) required for all of the plurality of threads assigned to the middle priority level is increased for the newly added thread of the AAC encode function thread T2.

Then, the priority changing process is carried out again. This means when the processing rate of the encoding process carried out in the AAC encode function thread T2 likely becomes lower than the data transfer rate at the single reading speed, or is eventually decreased to a predetermined processing rate slightly lower than that although the AAC encode function thread T2 is assigned to the middle priority level (the result of the judgment in the step S2 is "YES"), the priority level value of the ACC encode function thread T2 is changed from a current middle priority value to a value higher than the current middle priority level value. In the present embodiment, it is assumed that the priority level value of the AAC encode function thread T2 is changed from 250, viz., middle level to 157, viz., high level (step S3). Since the number of the threads assigned to the high priority level is increased as a result of the process of changing the priority level, the CPU processing times required for all of the threads assigned to the high priority level (each shown by, for example, a legend "t3" in FIG. 4) are respectively decreased in an even manner so that the total processing time required for all of the plurality of threads assigned to the high priority level remain substantially the same. This leads to the fact that the AAC encode function thread T2 is processed on a priority basis although each of the processes assigned to the high priority level other than the AAC encode function thread T2 becomes slightly slow in processing time.

Further, since the number of the threads assigned to the high priority level is increased, and thus, the number of threads assigned to the low priority level is decreased as a result of the process of changing the priority level, the CPU processing times required for all of the threads assigned to the low priority level each shown by a legend "t1" is decreased.

As will be appreciated from the foregoing description, it is to be understood that the present embodiment of the data processing program can adjust the CPU processing time by adaptively changing the processing priority level of one of the AAC encode function thread T2 for carrying out a specific encoding process such as, for example, a data compression and encoding process, and other data process threads, in accordance with processing state of the specific encoding process, when the thread T2 is executed, thereby ensuring that the required processing rates of the other processes are secured even though the data from the disk shaped recording medium 1 may be ripped at a high speed, and thus the data processing can be flexibly carried out responding to the processing state of the other processes.

In addition, the present embodiment of the data processing program can finely adjust the priority level in accordance with the change of the processing state of the AAC encode function thread T2, thereby ensuring that the high speed ripping is carried out while influences on threads implementing the route searching process, the map display process, and the like, other than the AAC encode function thread T2, are controlled, resulting from the fact that the processor 1 is operative to change the priority level of the thread at predetermined timings.

The present embodiment of the data processing program can change the processing priority level of the AAC encode function thread from a current priority level value to a priority level value higher than the current priority level value when the processing rate of the AAC encode function thread T2 (specific encoding process) becomes lower than the reading rate of data to be encoded, thereby preventing the ripping process from being interrupted due to the fact that the disk reading rate from bottlenecking the AAC encoding process.

Further, the processor 11, as changing means, is adapted to gradually change the priority level of the AAC encode function thread T2 from a current priority level value to a priority level value higher than the current priority level value when the processing rate of the AAC encode function thread T2 becomes lower than the minimum value of the reading rate of data to be encoded, for example, single speed. This leads to the fact that the present embodiment of the data processing program can normally set the priority level of the AAC encode function thread T2, which is large in processing load, at a relatively low level value, and carry out a data processing operation flexibly responding to the whole state of the processing, in such a manner that the ripping process can be executed at a high speed while maintaining a smooth navigation environment ensuring that the decreases of the processing rates of the other processes are controlled.

### INDUSTRIAL APPLICABILITY OF THE PRESENT INVENTION

As will be seen from the foregoing description, it will be understood that the data processing program and the data processing device according to the present invention can change the processing priority level in accordance with the processing state, thereby ensuring to carry out a data processing operation flexibly responding to the whole state. This leads to the fact that that the data processing program and the data processing device according to the present invention have effects of ripping information data from a disk shaped recording medium, or the like, at a high speed while securing required processing rates for the other processes, and are available as a data processing program and a data processing device effective when built into a storing and reproducing apparatus for storing and reproducing information read from a medium disk, or the like, and a data processing program and a data processing device effective built when built-into a car navigation system.

## Claims

1. A data processing program executable by a computer to implement a function as changing means for changing a processing priority level of one of a specific encoding process of encoding data and the other data process in accordance with a processing rate of said specific encoding process.

2. A data processing program as set forth in claim 1, in which
said changing means is operative to change said processing priority level at a predetermined timing.

3. A data processing program as set forth in claim 1, in which said changing means is operative to change said processing priority level of said specific encoding process from a current processing priority level to a high processing priority level higher than said current processing priority level when said processing rate of said specific encoding process becomes smaller than a reading speed of reading data to be encoded from a storage medium.

4. A data processing program as set forth in claim 1, in which said changing means is operative to change said processing priority level of said specific encoding process from a current processing priority level to a high processing priority level higher than said current processing priority level when said processing rate of said specific encoding process becomes smaller than a minimum level of a reading speed of reading data to be encoded from a storage medium.

5. A data processing device comprising a data processing program executable by a computer to implement a function as changing means for changing a processing priority level of one of a specific encoding process of encoding data and the other data process in accordance with a processing rate of said specific encoding process.
